# EUROPÄISCHE PATENTANMELDUNG

(11) **EP 3 650 161 A1**
(43) Veröffentlichungstag der Anmeldung: **13.05.2020**
(21) Anmeldenummer: 18205557.4
(22) Anmeldetag: 12.11.2018
(51) Int. Cl.: B23K 26/046

(54) **FOKUSSIEREINRICHTUNG UND LASERBEARBEITUNGSEINRICHTUNG MIT EINER SOLCHEN FOKUSSIEREINRICHTUNG**

(71) Anmelder: TRUMPF Schweiz AG, 7214 Grüsch (CH)
(72) Erfinder: BÜCHE, Dirk, 7215 Fanas (CH); HAGENSCHMIDT, Stephan, 7220 Schiers (CH)
(74) Vertreter: Kohler Schmid Möbus Patentanwälte

(57) **Zusammenfassung**

Die Erfindung betrifft eine Fokussiereinrichtung (1) zur Fokussierung eines Laserstrahls zur Bearbeitung eines Werkstücks, mit einer optischen Einrichtung (5), welche eine optische Achse (7) aufweist, und welche eingerichtet ist zur Durchleitung eines Laserstrahls, einem Halteelement (9), an welchem die optische Einrichtung (5) angeordnet ist, einem Verbindungselement (17), welches mittels mehrerer im Wesentlichen parallel zueinander angeordneter erster Federelemente (19) mit dem Halteelement (9) elastisch verbunden ist, einem Basiselement (21), welches mittels mehrerer im Wesentlichen parallel zueinander angeordneter zweiter Federelemente (23) mit dem Verbindungselement (17) elastisch verbunden ist, einem ersten Antriebselement (25), welches an dem Halteelement (9) angeordnet ist, und mit einem zweiten Antriebselement (29), welches an dem Basiselement (21) angeordnet ist, wobei das erste Antriebselement (25) und das zweite Antriebselement (29) durch Wechselwirkung miteinander relativ zueinander verlagerbar sind, wodurch das Halteelement (9), das Verbindungselement (17) und das Basiselement (21) relativ zueinander verlagerbar sind und durch Auslenkung der mehreren ersten Federelemente (19) und der mehreren zweiten Federelemente (23) die optische Einrichtung (5) entlang der optischen Achse (7) verlagerbar ist. Dabei ist vorgesehen, dass die optische Achse (7) mindestens zwischen zwei Federelementen der mehreren ersten Federelemente (19) und mindestens zwischen zwei Federelementen der mehreren zweiten Federelemente (23) angeordnet ist.

## Beschreibung

Die Erfindung betrifft eine Fokussiereinrichtung und eine Laserbearbeitungseinrichtung mit einer solchen Fokussiereinrichtung.

Fokussiereinrichtungen zur Fokussierung eines Laserstrahls sind bekannt. Sie werden beispielsweise verwendet zur Verstellung einer Z-Achse bei einer Werkstückbearbeitung, beispielsweise bei 3D-Beschriftungen, zur Substitution einer F-Theta-Linse oder zur Fokuslagenverstellung. Dabei ist eine möglichst schnelle und dynamische lineare Verlagerung einer oder mehrerer Linsen erforderlich. Hierzu werden typischerweise wälzlagerbasierte Linearführungen oder Buchsenführungen zur Linsenverlagerung eingesetzt. Derartige Führungen haben den Nachteil, dass sie regelmäßig gewartet, beispielsweise geschmiert werden müssen und somit unproduktive Ausfallzeit entsteht. Schmiermittel, welche zur Langzeitschmierung für lange Wartungsintervalle geeignet sind, sind dabei oft nicht einsetzbar, da diese zur Ausgasung neigen, was zu einer Schädigung der Linsen führen kann.

Der Erfindung liegt die Aufgabe zugrunde, eine Fokussiereinrichtung und eine Laserbearbeitungseinrichtung mit einer solchen Fokussiereinrichtung zu schaffen, wobei Vorteile, beispielsweise hinsichtlich möglichst langer Wartungsintervalle oder längerer Lebensdauer, gegenüber bekannten Einrichtungen dieser Art realisiert werden.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem eine Fokussiereinrichtung zur Fokussierung eines Laserstrahls zur Bearbeitung eines Werkstücks geschaffen wird, mit einer optischen Einrichtung, welche eine optische Achse aufweist, und welche eingerichtet ist zur Durchleitung eines Laserstrahls, wobei ein Strahlengang des Laserstrahls insbesondere entlang der optischen Achse verläuft. Alternativ oder zusätzlich kann eine solche Fokussiereinrichtung auch in Verbindung mit einer Bilderkennungseinrichtung, beispielsweise einer Kamera, zum Nachführen der Fokuslage verwendet werden. Die Fokussiereinrichtung weist weiterhin ein Halteelement, an welchem die optische Einrichtung, vorzugsweise fest, insbesondere starr und/oder permanent, angeordnet ist, und ein Verbindungselement, welches mittels mehrerer im Wesentlichen parallel zueinander angeordneter erster Federelemente mit dem Halteelement elastisch verbunden ist, auf. Weiterhin weist die Fokussiereinrichtung ein, insbesondere ortsfestes, Basiselement auf, welches mittels mehrerer im Wesentlichen parallel zueinander angeordneter zweiter Federelemente mit dem Verbindungselement elastisch verbunden ist. Hierzu sind die mehreren ersten Federelemente und die mehreren zweiten Federelemente insbesondere biegeelastisch ausgebildet. Ist die Fokussiereinrichtung Teil einer Laserbearbeitungseinrichtung, so ist die Fokussiereinrichtung insbesondere über das Basiselement mit einem übrigen Teil der Laserbearbeitungseinrichtung fest verbunden. Darüber hinaus weist die Fokussiereinrichtung ein erstes Antriebselement, weiches an dem Halteelement, insbesondere fest, angeordnet ist, und ein zweites Antriebselement, welches an dem Basiselement, insbesondere fest, angeordnet ist, auf. Das erste Antriebselement und däs zweite Äntriebselemenfsind durch Wechselwirkung miteinander relativ zueinander, insbesondere entlang der optischen Achse, verlagerbar, wodurch das Halteelement, das Verbindungselement und das Basiselement relativ zueinander verlagerbar sind und durch Auslenkung der mehreren ersten Federelemente und der mehreren zweiten Federelemente die optische Einrichtung entlang der optischen Achse verlagerbar ist. Insbesondere schwingen die mehreren ersten und zweiten Federelemente nach einer solchen Auslenkung wieder in ihre Ausgangslage zurück, sodass eine reproduzierbare Ruhelage des Halteelements realisiert ist. Insbesondere führt eine Relativverlagerung des Halteelements weder zu einem Verkippen noch zu einer transversalen Verlagerung der optischen Einrichtung bezüglich der optischen Achse. Die optische Achse ist mindestens zwischen zwei, insbesondere paarweise angeordneten, Federelementen der mehreren ersten Federelemente und mindestens zwischen zwei, insbesondere paarweise angeordneten, Federelementen der mehreren zweiten Federelemente angeordnet. Besonders bevorzugt sind das erste und/oder das zweite Antriebselement mindestens zwischen den zwei Federelementen der mehreren ersten Federelemente und mindestens zwischen den zwei Federelementen der mehreren zweiten Federelemente angeordnet. Weiterhin ist besonders bevorzugt die optische Einrichtung - in Richtung der optischen Achse gesehen - mindestens zwischen den zwei Federelementen der mehreren ersten Federelemente und mindestens zwischen den zwei Federelementen der mehreren zweiten Federelemente angeordnet.

Die erfindungsgemäße Fokussiereinrichtung weist Vorteile gegenüber dem Stand der Technik auf. Dadurch, dass die optische Achse mindestens zwischen zwei Federelementen der mehreren ersten Federelemente und mindestens zwischen zwei Federelementen der mehreren zweiten Federelemente angeordnet ist, können die mehreren ersten und zweiten Federelemente bei einem gegebenen Bauraum der Fokussiereinrichtung besonders lang ausgeführt werden, wodurch ein weicheres Federsystem beziehungsweise eine geringere Federkonstante als bei bekannten Fokussiereinrichtungen realisiert wird. Zudem ergibt sich die Möglichkeit, die Steifigkeit der Federelemente auf einfache Weise einzustellen. Beispielsweise kann bei Ausführung der Federelemente als Blattfedern deren Steifigkeit durch Variation ihrer Breite und Dicke einfach eingestellt werden. Darüber hinaus kann die erfindungsgemäße Fokussiereinrichtung besonders kompakt ausgestaltet werden, da die ersten und die zweiten Federelemente die optische Einrichtung sowie das erste und das zweite Antriebselement quasi seitlich einrahmen und somit eine optimale Nutzung des Bauraums realisiert werden kann.

Es wird eine Ausführungsform der Fokussiereinrichtung bevorzugt, die sich dadurch auszeichnet, dass die mehreren ersten Federelemente und die mehreren zweiten Federelemente jeweils als Blattfedern ausgebildet sind. Mittels Blattfedern der angesprochenen Art kann eine dauerfeste Ausgestaltung der Fokussiereinrichtung realisiert werden.

Es wird eine Ausführungsform der Fokussiereinrichtung bevorzugt, die sich dadurch auszeichnet, dass die mehreren ersten Federelemente jeweils mit einem ersten Ende an dem Halteelement und mit einem, dem ersten Ende entgegengesetzt liegenden, zweiten Ende an dem Verbindungselement, insbesondere fest, angeordnet sind. Vorzugsweise sind die mehreren zweiten Federelemente jeweils mit einem ersten Ende an dem Verbindungselement und mit einem, diesem ersten Ende entgegengesetzt liegenden, zweiten Ende an dem Basiselement, insbesondere fest, angeordnet. Eine solche Anordnung ist besonders kompakt.

Es wird eine Ausführungsform der Fokussiereinrichtung bevorzugt, die sich dadurch auszeichnet, dass die optische Achse zwischen zwei, insbesondere paarweise angeordneten, weiteren Federelementen der mehreren ersten Federelemente und zwischen zwei, insbesondere paarweise angeordneten, weiteren Federelementen der mehreren zweiten Federelemente angeordnet ist. Vorzugsweise weist die Fokussiereinrichtung insgesamt vier erste Federelemente und vier zweite Federelemente auf. Hierdurch wird eine lineare Verlagerung der optischen Einrichtung entlang der optischen Achse sichergestellt, wobei ein Verkippen oder eine transversale Verlagerung der optischen Einrichtung sicher verhindert werden. Insbesondere sind die ersten und die zweiten Federelemente allesamt gleich ausgebildet, beispielsweise bezüglich ihres Materials und ihrer Dimension, so dass sie jeweils eine gleiche Federcharakteristik aufweisen. Die ersten und die zweiten Federelemente können dabei eine beliebige Form aufweisen. Beispielsweise ist neben einer - im Längsschnitt gesehen - rechteckigen Form auch eine taillierte, bauchige, trapezförmige oder andersartige Form möglich.

Es wird eine Ausführungsform der Fokussiereinrichtung bevorzugt, die sich dadurch auszeichnet, dass entlang der optischen Achse jeweils ein Paar der ersten Federelemente und ein Paar der zweiten Federelemente abwechselnd angeordnet sind. Eine solche Anordnung ist für eine präzise lineare Verlagerung der optischen Einrichtung vorteilhaft. Alternativ können Paare der ersten und der zweiten Federelemente aber auch in einer anderen Reihenfolge angeordnet sein. Beispielsweise können zwei Paare der ersten Federelemente zwischen zwei Paaren der zweiten Federelemente, oder zwei Paare der zweiten Federelemente zwischen zwei Paaren der ersten Federelemente angeordnet sein.

Es wird eine Ausführungsform der Fokussiereinrichtung bevorzugt, die sich dadurch auszeichnet, dass die mehreren ersten Federelemente und die mehreren zweiten Federelemente in einem nicht ausgelenkten Zustand jeweils parallel zueinander angeordnet sind. Vorzugsweise sind bei einer Relatiwerlagerung des Halteelements die mehreren ersten Federelemente gegenläufig zu den mehreren zweiten Federelementen ausgelenkt. Die jeweiligen Auslenkachsen einer solchen Auslenkung der Federelemente liegen insbesondere senkrecht zu der optischen Achse. Es kann so auf einfache Weise eine reproduzierbare Ruhelage des Halteelements festgelegt werden. Dadurch, dass die Federelemente im nicht ausgelenkten Zustand vorzugsweise parallel zueinander ausgebildet sind, kann eine Auslenkung in beide Richtungen der optischen Achse jeweils mit dem gleichen Kraftbetrag ermöglicht werden.

Es wird eine Ausführungsform der Fokussiereinrichtung bevorzugt, die sich dadurch auszeichnet, dass das erste Antriebselement und das zweite Antriebselement jeweils einen Hohlraum entlang der optischen Achse aufweisen, durch welchen der Laserstrahl führbar ist. Eine solche Anordnung ermöglicht einen besonders kompakten Bauraum.

Es wird eine Ausführungsform der Fokussiereinrichtung bevorzugt, die sich dadurch auszeichnet, dass das erste Antriebselement und das zweite Antriebselement durch magnetische Wechselwirkung miteinander relativ zueinander verlagerbar sind. Eine solche Wechselwirkung kann in einfacher Weise als elektromagnetische Wechselwirkung realisiert werden.

Es wird eine Ausführungsform der Fokussiereinrichtung bevorzugt, die sich dadurch auszeichnet, dass das erste Antriebselement eine Spule aufweist, wobei das zweite Antriebselement einen Magnet aufweist. Besonders bevorzugt sind dabei das erste und das zweite Antriebselement als Tauchspulenantrieb ausgebildet. Beispielsweise greift das erste Antriebselement in eine entsprechend ausgebildete Ausnehmung in dem zweiten Antriebselement ein und/oder umgreift dieses zumindest abschnittsweise, wobei die beiden Antriebselemente relativ zueinander durch Beaufschlagung der Spule mit elektrischem Strom entlang der optischen Achse verschiebbar sind. Eine solche Anordnung ist bekannt und einfach umsetzbar.

Es wird eine Ausführungsform der Fokussiereinrichtung bevorzugt, die sich dadurch auszeichnet, dass das Basiselement und das Halteelement im Wesentlichen an einer ersten Seite der optischen Achse angeordnet sind, wobei das Verbindungselement im Wesentlichen an einer, vorzugsweise der ersten Seite gegenüberliegenden, zweiten Seite der optischen Achse angeordnet ist. Eine solche Anordnung führt zu einem besonders kompakten Bauraum.

Es wird eine Ausführungsform der Fokussiereinrichtung bevorzugt, die sich dadurch auszeichnet, dass die optische Einrichtung mindestens eine Linse aufweist, welche einen optischen Werkstoff, beispielsweise Glas, aufweist. Die optische Einrichtung kann genau eine Linse oder mehrere Linsen aufweisen. Mittels einer oder mehrerer verlagerbarer Linsen kann auf einfache Weise eine Fokussiereinrichtung realisiert werden.

Es wird eine Ausführungsform der Fokussiereinrichtung bevorzugt, die sich dadurch auszeichnet, dass das Halteelement relativ zu dem Basiselement entlang der optischen Achse in einem Bereich von +/- 3 mm, vorzugsweise von +/- 2 mm, vorzugsweise von +/-1 mm um eine Ruhelage des Halteelements bei nicht ausgelenkten ersten und zweiten Federelementen auslenkbar ist. Auslenkungen in diesen Bereichen können mittels der erfindungsgemäßen Fokussiereinrichtung mit hoher Präzision realisiert werden.

Es wird eine Ausführungsform der Fokussiereinrichtung bevorzugt, die sich dadurch auszeichnet, dass eine Messeinrichtung vorgesehen ist, welche eingerichtet ist, um eine Relativverlagerung des Halteelements, insbesondere der optischen Einrichtung, zu messen. Eine solche Relatiwerlagerung ist insbesondere im Mikrometerbereich, vorzugsweise mit einer Auflösung von 10 µm, messbar. Vorzugsweise weist die Messeinrichtung einen, beispielsweise an dem Halteelement angeordneten, inkrementell codierten Glasmaßstab und einen mit diesem zusammenwirkenden, insbesondere relativ zu dem Basiselement ortsfest angeordneten, optischen Sensor auf. Alternativ kann die Messeinrichtung insbesondere einen magnetischen Sensor an dem Basiselement, beispielsweise einen Hall-Sensor, und eine Magneteinrichtung, beispielsweise ein Magnetband, an dem Halteelement zur Messung der Relativverlagerung des Halteelements aufweisen. Alternativ können auch andere geeignete Messeinrichtungen vorgesehen sein. Derartige Messeinrichtungen zur Bestimmung einer Relativverlagerung können kostengünstig realisiert werden.

Es wird eine Ausführungsform der Fokussiereinrichtung bevorzugt, die sich dadurch auszeichnet, dass eine Regelungseinrichtung vorgesehen ist, welche eingerichtet ist, um die Relativverlagerung des Halteelements, insbesondere der optischen Einrichtung, zu regeln. Insbesondere können mittels der Regelungseinrichtung Eigenfrequenzen verhindert werden, sodass unkontrollierte Betriebszustände der Fokussiereinrichtung vermieden werden können.

Vorzugsweise ist die Regelungseinrichtung eingerichtet, um eine erste Eigenfrequenz der Fokussiereinrichtung auszufiltern. Zudem sind vorzugsweise die ersten und die zweiten Federelemente derart steif ausgelegt, dass die zweite Eigenfrequenz so hoch liegt, dass diese beim Betrieb der Fokussiereinrichtung nicht erreicht wird.

Die Aufgabe wird insbesondere auch gelöst, indem eine Laserbearbeitungseinrichtung zur Bearbeitung, insbesondere Markierung, eines Werkstücks mittels eines Laserstrahls geschaffen wird, welche eine Fokussiereinrichtung nach einer der zuvor beschriebenen Ausführungsformen aufweist. Hierbei ergeben sich insbesondere die Vorteile, die bereits in Zusammenhang mit der Fokussiereinrichtung erläutert wurden.

Die Erfindung wird im Folgenden anhand der Zeichnung näher erläutert. Dabei zeigen:
- Figur 1: eine schematische Darstellung einer Fokussiereinrichtung in einer perspektivischen Ansicht,
- Figur 2: eine schematische Darstellung der Fokussiereinrichtung gemäß Figur 1 in einem Längsschnitt entlang einer optischen Achse der Fokussiereinrichtung, und
- Figur 3: eine schematische Darstellung eines Ausschnitts einer Fokussiereinrichtung gemäß Figur 1 mit einer Messeinrichtung in einer perspektivischen Ansicht.

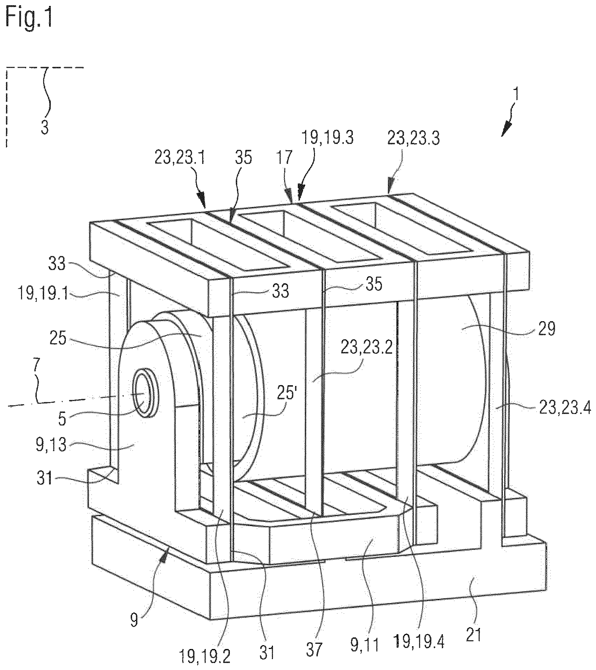

Figur 1 zeigt schematisch ein Ausführungsbeispiel einer Fokussiereinrichtung 1 zur Fokussierung eines Laserstrahls zur Bearbeitung eines Werkstücks in einer perspektivischen Ansicht. Eine solche Fokussiereinrichtung 1 ist hier Teil einer Laserbearbeitungseinrichtung 3 zur Bearbeitung, insbesondere Markierung, eines Werkstücks mittels eines Laserstrahls. Die Fokussiereinrichtung 1 gemäß Figur 1 kann jedoch auch anderweitig verbaut beziehungsweise für eine andere Applikation vorgesehen sein, beispielsweise zum Nachführen der Fokuslage für eine Bilderkennungseinrichtung. Die Laserbearbeitungseinrichtung 3 ist in Figur 1 lediglich angedeutet. Die Fokussiereinrichtung 1 weist eine optische Einrichtung 5 auf, welche eine optische Achse 7 aufweist und welche eingerichtet ist zur Durchleitung eines Laserstrahls. Weiterhin weist die Fokussiereinrichtung 1 ein Halteelement 9 auf, an welchem die optische Einrichtung 5 angeordnet ist. Das Halteelement 9 weist einen - aus Sicht eines Betrachters gesehen - unterhalb der optischen Einrichtung 5 beziehungsweise der optischen Achse 7 angeordneten und davon beabstandeten Schlittenabschnitt 11 und einen seitlich daran, beispielsweise mittels nicht bildlich dargestellter Schrauben, fest angeordneten Trägerabschnitt 13 auf. Der Schlittenabschnitt 11 erstreckt sich im Wesentlichen entlang der optischen Achse 7. An dem Trägerabschnitt 13 ist die optische Einrichtung 5, beispielsweise mittels kleben oder klemmen, fest angeordnet.

Die Fokussiereinrichtung 1 weist ein Verbindungselement 17 auf, welches - aus Sicht des Betrachters - oberhalb der optischen Einrichtung 5 beziehungsweise der optischen Achse 7 angeordnet und davon beabstandet ist. Das Verbindungselement 17 ist mittels mehrerer im Wesentlichen parallel zueinander angeordneter erster Federelemente 19 mit dem Halteelement 9 elastisch verbunden. Die Fokussiereinrichtung 1 weist hier vier erste Federelemente 19.1, 19.2, 19.3, 19.4 auf. Die Fokussiereinrichtung 1 weist weiterhin ein Basiselement 21 auf, über welches die Fokussiereinrichtung 1 mit einem übrigen Teil der Laserbearbeitungseinrichtung 3 fest verbunden ist. Das Basiselement 21 ist mittels mehrerer im Wesentlichen parallel zueinander angeordneter zweiter Federelemente 23 mit dem Verbindungselement 17 elastisch verbunden. Insgesamt sind vier zweite Federelemente 23.1, 23.2, 23.3, 23.4 vorgesehen.

Die Fokussiereinrichtung 1 weist weiterhin ein erstes Antriebselement 25 auf, welches an dem Halteelement 9 beziehungsweise dem Trägerabschnitt 13 fest angeordnet ist, beispielsweise mittels nicht bildlich dargestellter Schrauben. Weiterhin weist die Fokussiereinrichtung 1 ein zweites Antriebselement 29 auf, welches fest an dem Basiselement 21 angeordnet ist.

Das erste Antriebselement 25 und das zweite Antriebselement 29 sind durch Wechselwirkung, insbesondere magnetische Wechselwirkung, miteinander relativ zueinander entlang der optischen Achse 7 verlagerbar, wodurch das Halteelement 9, das Verbindungselement 17 und das Basiselement 21 relativ zueinander verlagerbar sind und durch Auslenkung der mehreren ersten Federelemente 19 und der mehreren zweiten Federelemente 23 die optische Einrichtung 5 entlang der optischen Achse 7 verlagerbar ist. Insbesondere bewirkt eine Verlagerung des Halteelements 9 relativ zu dem Basiselement 21 um eine erste Verlagerungsstrecke eine Verlagerung des Halteelements 9 relativ zu dem Verbindungselement 17 um eine zweite Verlagerungsstrecke und des Verbindungselements 17 relativ zu dem Basiselement 21 um eine dritte Verlagerungsstrecke, wobei die zweite und die dritte Verlagerungsstrecke jeweils kleiner, insbesondere halb so groß sind wie die erste Verlagerungsstrecke.

Die optische Achse 7 ist mindestens zwischen zwei Federelementen der mehreren ersten Federelemente 19 und mindestens zwischen zwei Federelementen der mehreren zweiten Federelemente 23 angeordnet. Bei dem in Figur 1 gezeigten Ausführungsbeispiel ist die optische Achse 7 zwischen zwei paarweise angeordneten Federelementen 19.1 und 19.2, sowie zwischen zwei paarweise angeordneten weiteren Federelementen 19.3 und 19.4 der mehreren ersten Federelemente 19 angeordnet. Weiterhin ist die optische Achse 7 zwischen zwei paarweise angeordneten Federelementen 23.1 und 23.2, sowie zwischen zwei paarweise angeordneten weiteren Federelementen 23.3 und 23.4 der mehreren zweiten Federelemente 23 angeordnet. Ein Verkippen oder eine transversale Verlagerung der optischen Einrichtung 5 bezüglich der optischen Achse 7 kann bei einer solchen Anordnung beim bestimmungsgemäßen Betrieb der Fokussiereinrichtung 1 vermieden werden, da eine transversale Verlagerung des Verbindungselements 17 nach unten durch Auslenkung der zweiten Federelemente 23 durch eine transversale Verlagerung des Halteelements 9 in gleichem Maße nach oben durch Auslenkung der ersten Federelemente 19 - und umgekehrt - ausgeglichen wird. Es ist aber möglich, dass bei hohen Frequenzen oder bei Eigenfrequenzen die zweite und die dritte Verlagerungsstrecke jeweils nicht genau halb so groß sind wie die erste Verlagerungsstrecke, so dass eine geringe transversale Verlagerung der optischen Einrichtung 5 bewirkt wird. Derartige Betriebszustände können insbesondere durch geeignete Auslegung der Steifigkeiten der Federelemente 19, 23 oder durch eine geeignete Regelung der Antriebselemente 25, 29 vermieden werden, oder es kann eine transversale Verlagerung der optischen Einrichtung 5 auf ein akzeptables Niveau begrenzt werden.

Bei diesem Ausführungsbeispiel sind das erste Antriebselement 25 und das zweite Antriebselement 29 zwischen den zwei Federelementen 19.1, 19.2 sowie 19.3, 19.4 der mehreren ersten Federelemente 19 und zwischen den zwei Federelementen 23.1, 23.2 sowie 23.3, 23.4 der mehreren zweiten Federelemente 23 angeordnet. Weiterhin ist die optische Einrichtung 5 - zumindest in Richtung der optischen Achse 7 gesehen - zwischen den zwei Federelementen 19.1, 19.2 sowie 19.3, 19.4 der mehreren ersten Federelemente 19 und zwischen den zwei Federelementen 23.1, 23.2 sowie 23.3, 23.4 der mehreren zweiten Federelemente 23 angeordnet.

Die mehreren ersten Federelemente 19 und die mehreren zweiten Federelemente 23 sind als Blattfedern ausgebildet. Die Blattfedern sind beispielsweise aus einem geeigneten Federstahl hergestellt.

Die mehreren ersten Federelemente 19 sind jeweils mit einem ersten Ende 31, welches der Übersichtlichkeit wegen nur für die ersten Federelemente 19.1, 19.2 mit einem Bezugszeichen versehen ist, an dem Halteelement 9 angeordnet. Weiterhin sind die mehreren ersten Federelemente 19 mit einem zweiten Ende 33, welches beispielhaft für die ersten Federelemente 19.1, 19.2 mit einem Bezugszeichen versehen ist, an dem Verbindungselement 17 angeordnet. Die mehreren zweiten Federelemente 23 sind jeweils mit einem ersten Ende 35, welches beispielhaft für die zweiten Federelemente 23.1, 23.2 mit einem Bezugszeichen versehen ist, an dem Verbindungselement 17, und mit einem zweiten Ende 37, welches beispielhaft an dem zweiten Federelement 23.2 mit einem Bezugszeichen versehen ist, an dem Basiselement 21 angeordnet.

Die zweiten Enden 33 der ersten Federelemente 19 und die ersten Enden 35 der zweiten Federelemente 23 sind, beispielsweise mittels nicht bildlich dargestellter Schrauben, mit dem Verbindungselement 17 fest verbunden. Die ersten Federelemente 19.1, 19.2, 19.3, 19.4 sind beispielsweise mittels nicht bildlich dargestellter Schrauben jeweils an ihren ersten Enden 31 mit dem Halteelement 9 fest verbunden. Die zweiten Federelemente 23.1, 23.2, 23.3, 23.4 sind beispielsweise mittels nicht bildlich dargestellter Schrauben jeweils an ihren zweiten Enden 37 mit dem Halteelement 9 fest verbunden.

Bei der Fokussiereinrichtung 1 gemäß Figur 1 sind entlang der optischen Achse 7 jeweils ein Paar der ersten Federelemente 19, hierein erstes Paar 19.1, 19.2 beziehungsweise ein zweites Paar 19.3, 19.4, und ein Paar der zweiten Federelemente 23, hier ein erstes Paar 23.1, 23.2 beziehungsweise ein zweites Paar 23.3, 23.4, abwechselnd angeordnet.

Die mehreren ersten Federelemente 19 und die mehreren zweiten Federelemente 23 sind in einem nicht ausgelenkten Zustand - wie er in Figur 1 dargestellt ist - jeweils parallel zueinander angeordnet. Bei einer Relativverlagerung des Halteelements 9 beziehungsweise des Verbindungselements 17 aus einer Ruhelage - aus Sicht des Betrachters - nach links oder nach rechts entlang der optischen Achse 7 sind die mehreren ersten Federelemente 19 gegenläufig zu den mehreren zweiten Federelemente 23 ausgelenkt. Eine Verlagerung des Halteelements 9 beziehungsweise des Verbindungselements 17 nach links bewirkt ein Auslenken der ersten Federelemente 19 - aus Sicht des Betrachters - im Uhrzeigersinn und ein Auslenken der zweiten Federelemente 23 entgegen dem Uhrzeigersinn. Analog bewirkt eine Relatiwerlagerung des Halteelements 9 beziehungsweise des Verbindungselements 17 nach rechts ein Auslenken der ersten Federelemente 19 entgegen dem Uhrzeigersinn und ein Auslenken der zweiten Federelemente 23 im Uhrzeigersinn. Die Auslenkachsen der ersten und zweiten Federelemente 19, 23, um welche die ersten und zweiten Federelemente 19, 23 auslenkbar beziehungsweise biegbar sind, liegen jeweils parallel zueinander und senkrecht zu der optischen Achse 7, sowie senkrecht zu einer Längserstreckung der ersten Federelemente 19 und zweiten Federelemente 23. Bei einer Auslenkung der ersten Federelemente 19 beziehungsweise der zweiten Federelemente 23 werden diese insbesondere in einem Bereich jeweils zwischen dem ersten Ende 31, 35 und dem zweiten Ende 33, 37 gebogen.

Optional weist - wie in Figur 1 dargestellt - das erste Antriebselement 25 eine Spule auf, die mit dem Bezugszeichen 25' angedeutet ist. Das zweite Antriebselement 29 weist optional einen Magnet auf.

Das Basiselement 21 und das Halteelement 9 sind im Wesentlichen an einer ersten Seite der optischen Achse 7, nämlich unterhalb dieser, angeordnet, wobei das Verbindungselement 17 im Wesentlichen an einer der ersten Seite gegenüberliegenden zweiten Seite der optischen Achse 7, nämlich oberhalb dieser, angeordnet ist.

Optional weist die optische Einrichtung 5 mindestens eine Linse auf, welche einen optischen Werkstoff, beispielsweise Glas, aufweist. Bei dem Ausführungsbeispiel gemäß Figur 1 weist die optische Einrichtung 5 genau eine Linse auf.

Optional ist das Halteelement 9 relativ zu dem Basiselement 21 entlang der optischen Achse 7 in einem Bereich von +/- 3 mm, optional von +/- 2 mm, optional von +/-1 mm um die Ruhelage des Halteelements 9 bei nicht ausgelenkten ersten Federelementen 19 und zweiten Federelementen 23 auslenkbar.

Die Fokussiereinrichtung 1 ist über das Basiselement 21 beispielsweise mittels nicht bildlich dargestellter Schrauben mit dem übrigen Teil der Laserbearbeitungseinrichtung 3 fest verbunden.

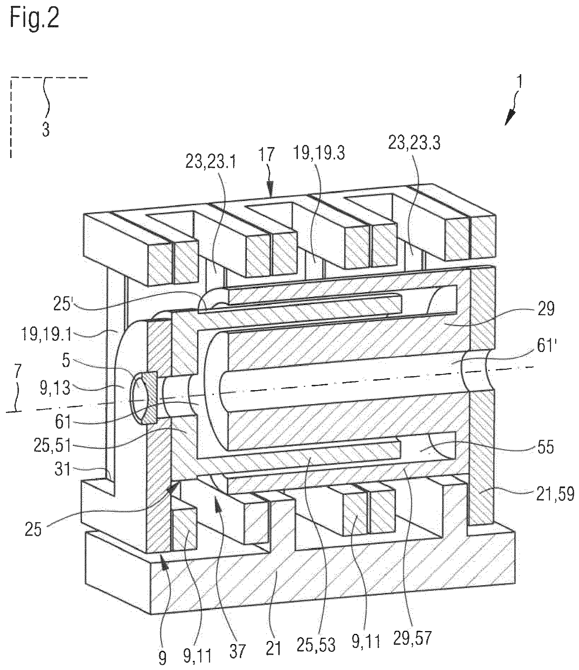

In Figur 2 ist die Fokussiereinrichtung 1 gemäß dem Ausführungsbeispiel nach Figur 1 in einem Längsschnitt entlang der optischen Achse 7 in einer perspektivischen Ansicht schematisch dargestellt. Gleiche und funktionsgleiche Elemente sind mit gleichen Bezugszeichen versehen, sodass insofern auf die vorangegangene Beschreibung verwiesen wird.

In der Schnittdarstellung wird leicht ersichtlich, dass die ersten Federelemente 19 an deren ersten Enden 31 relativ zu dem Basiselement 21 verlagerbar sind, während die zweiten Federelemente 23 an deren zweiten Enden 37 fest an dem Basiselement 21 angeordnet sind.

Das erste Antriebselement 25, welches beispielhaft eine Spule 25' aufweist, ist hülsenförmig ausgebildet. Es weist einen Kopfabschnitt 51 auf, welcher beispielsweise über nicht bildlich dargestellte Schrauben mit dem Trägerabschnitt 13 verbunden ist und welcher eine - im Querschnitt gesehen - kreisförmige Ausnehmung um die optische Achse 7 herum aufweist. Die optische Einrichtung 5, welche beispielhaft eine Linse ist, ist im Bereich eines äußeren, linken Endes des Kopfabschnitts 51 an dem Trägerabschnitt 13 angeordnet. Das erste Antriebselement 25 weist weiterhin einen Spulenträger 53 auf, auf welchem die Spule 25' aufgebracht ist und welcher sich von dem Kopfabschnitt 51 entlang der optischen Achse 7 nach rechts erstreckt. Das erste Antriebselement 25 ist, hier im Wesentlichen mit dem Spulenträger 53, in eine ringförmige Ausnehmung 55 des zweiten Antriebselements 29 eingreifend und darin verschiebbar angeordnet. Das erste Antriebselement 25 und das zweite Antriebselement 29 sind beispielhaft als Tauchspulenantrieb ausgebildet, wobei mittels elektromagnetischer Kraft durch Beaufschlagung der Spule 25' mit elektrischem Strom eine Verlagerung des ersten Antriebselements 25 relativ zu dem zweiten Antriebselement 29 nach links oder nach rechts entlang der optischen Achse 7 bewirkbar ist.

Alternativ kann das zweite Antriebselement 29 auch ohne eine hülsenförmige Außenhülle 57 ausgebildet sein, wobei dann das erste Antriebselement 25 mit dem Spulenträger 53 das zweite Antriebselement 29 zumindest abschnittsweise umgreift.

Das erste Antriebselement 25 und das zweite Antriebselement 29 weisen jeweils einen Hohlraum 61, 61' mit kreisförmigem Querschnitt entlang der optischen Achse 7 auf, durch welchen der Laserstrahl führbar ist. Der Hohlraum 61 umfasst auch die bereits beschriebene Ausnehmung in dem Kopfabschnitt 51.

Das zweite Antriebselement 29 ist beispielsweise mittels nicht bildlich dargestellter Schrauben mit einem Seitenteil 59 des Basiselements 21 fest verbunden.

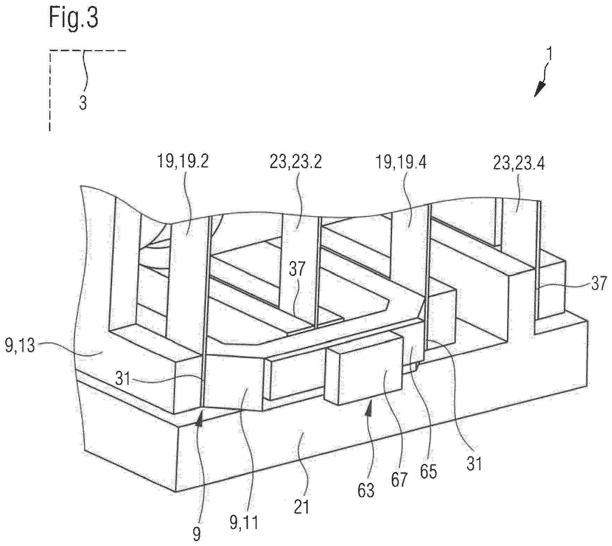

In Figur 3 ist schematisch ein Ausschnitt der Fokussiereinrichtung 1 analog zu Figur 1 als weiteres Ausführungsbeispiel in einer perspektivischen Ansicht dargestellt. Gleiche und funktionsgleiche Elemente sind mit gleichen Bezugszeichen versehen, sodass insofern auf die vorangegangene Beschreibung verwiesen wird. Die Fokussiereinrichtung 1 weist eine Messeinrichtung 63 auf, welche eingerichtet ist, um eine Relativverlagerung des Halteelements 9 mit der optischen Einrichtung 5 zu messen. Die Messeinrichtung 63 weist beispielhaft einen an dem Halteelement 9 angeordneten Glasmaßstab 65 und einen mit diesem zusammenwirkenden optischen Sensor 67 auf, welcher insbesondere bezüglich des Basiselements 21 ortsfest angeordnet ist. Der Sensor 67 kann beispielsweise fest an dem Basiselement 21 oder an einem Teil einer Laserbearbeitungseinrichtung 3 angeordnet sein. Alternativ kann die Messeinrichtung 63 auch einen magnetischen Sensor aufweisen.

Optional weist die Fokussiereinrichtung 1 eine nicht bildlich dargestellte Regelungseinrichtung auf, welche eingerichtet ist, um die Relatiwerlagerung des Halteelements 9 mit der optischen Einrichtung 5 zu regeln.

Insgesamt zeigt sich, dass mittels der Fokussiereinrichtung 1 und der Laserbearbeitungseinrichtung 3 eine schnelle und dynamische Relativverlagerung der optischen Einrichtung 5 dauerfest möglich ist.

## Patentansprüche

1. Fokussiereinrichtung (1) zur Fokussierung eines Laserstrahls zur Bearbeitung eines Werkstücks, mit
- einer optischen Einrichtung (5), welche eine optische Achse (7) aufweist, und welche eingerichtet ist zur Durchleitung eines Laserstrahls,
- einem Halteelement (9), an welchem die optische Einrichtung (5) angeordnet ist,
- einem Verbindungselement (17), welches mittels mehrerer im Wesentlichen parallel zueinander angeordneter erster Federelemente (19) mit dem Halteelement (9) elastisch verbunden ist,
- einem Basiselement (21), welches mittels mehrerer im Wesentlichen parallel zueinander angeordneter zweiter Federelemente (23) mit dem Verbindungselement (17) elastisch verbunden ist,
- einem ersten Antriebselement (25), welches an dem Halteelement (9) angeordnet ist, und mit
- einem zweiten Antriebselement (29), welches an dem Basiselement (21) angeordnet ist, wobei
- das erste Antriebselement (25) und das zweite Antriebselement (29) durch Wechselwirkung miteinander relativ zueinander verlagerbar sind, wodurch das Halteelement (9), das Verbindungselement (17) und das Basiselement (21) relativ zueinander verlagerbar sind und durch Auslenkung der mehreren ersten Federelemente (19) und der mehreren zweiten Federelemente (23) die optische Einrichtung (5) entlang der optischen Achse (7) verlagerbar ist,
**dadurch gekennzeichnet, dass**
- die optische Achse (7) mindestens zwischen zwei Federelementen der mehreren ersten Federelemente (19) und mindestens zwischen zwei Federelementen der mehreren zweiten Federelemente (23) angeordnet ist.

2. Fokussiereinrichtung (1) nach Anspruch 1, **dadurch gekennzeichnet, dass** die mehreren ersten Federelemente (19) und die mehreren zweiten Federelemente (23) jeweils als Blattfedern ausgebildet sind.

3. Fokussiereinrichtung (1) nach Anspruch 1 oder 2, **dadurch gekennzeichnet, dass** die mehreren ersten Federelemente (19) jeweils mit einem ersten Ende (31) an dem Halteelement (9) und mit einem zweiten Ende (33) an dem Verbindungselement (17) angeordnet sind, wobei die mehreren zweiten Federelemente (23) jeweils mit einem ersten Ende (35) an dem Verbindungselement (17) und mit einem zweiten Ende (37) an dem Basiselement (21) angeordnet sind.

4. Fokussiereinrichtung (1) nach einem der vorhergehenden Ansprüche, **dadurch gekennzeichnet, dass** die optische Achse (7) zwischen zwei weiteren Federelementen der mehreren ersten Federelemente (19) und zwischen zwei weiteren Federelementen der mehreren zweiten Federelemente (23) angeordnet ist.

5. Fokussiereinrichtung (1) nach einem der vorhergehenden Ansprüche, **dadurch gekennzeichnet, dass** entlang der optischen Achse (7) jeweils ein Paar der ersten Federelemente (19) und ein Paar der zweiten Federelemente (23) abwechselnd angeordnet sind.

6. Fokussiereinrichtung (1) nach einem der vorhergehenden Ansprüche, **dadurch gekennzeichnet, dass** die mehreren ersten Federelemente (19) und die mehreren zweiten Federelemente (23) in einem nicht ausgelenkten Zustand jeweils parallel zueinander angeordnet sind, wobei vorzugsweise bei einer Relativverlagerung des Halteelements (9) die mehreren ersten Federelemente (19) gegenläufig zu den mehreren zweiten Federelementen (23) ausgelenkt sind.

7. Fokussiereinrichtung (1) nach einem der vorhergehenden Ansprüche, **dadurch gekennzeichnet, dass** das erste Antriebselement (25) und das zweite Antriebselement (29) jeweils einen Hohlraum (61,61') entlang der optischen Achse (7) aufweisen, durch welchen der Laserstrahl führbar ist.

8. Fokussiereinrichtung (1) nach einem der vorhergehenden Ansprüche, **dadurch gekennzeichnet, dass** das erste Antriebselement (25) und das zweite Antriebselement (29) durch magnetische Wechselwirkung miteinander relativ zueinander verlagerbar sind.

9. Fokussiereinrichtung (1) nach einem der vorhergehenden Ansprüche, **dadurch gekennzeichnet, dass** das erste Antriebselement (25) eine Spule (25') aufweist, wobei das zweite Antriebselement (29) einen Magnet aufweist.

10. Fokussiereinrichtung (1) nach einem der vorhergehenden Ansprüche, **dadurch gekennzeichnet, dass** das Basiselement (21) und das Halteelement (9) im Wesentlichen an einer ersten Seite der optischen Achse (7) angeordnet sind, wobei das Verbindungselement (17) im Wesentlichen an einer zweiten Seite der optischen Achse (7) angeordnet ist.

11. Fokussiereinrichtung (1) nach einem der vorhergehenden Ansprüche, **dadurch gekennzeichnet, dass** die optische Einrichtung (5) mindestens eine Linse aufweist, welche einen optischen Werkstoff aufweist.

12. Fokussiereinrichtung (1) nach einem der vorhergehenden Ansprüche, **dadurch gekennzeichnet, dass** das Halteelement (9) relativ zu dem Basiselement (21) entlang der optischen Achse (7) in einem Bereich von +/- 3 mm, vorzugsweise von +/- 2 mm, vorzugsweise von +/-1 mm um eine Ruhelage des Halteelements (9) bei nicht ausgelenkten ersten Federelementen (19) und zweiten Federelementen (23) auslenkbar ist.

13. Fokussiereinrichtung (1) nach einem der vorhergehenden Ansprüche,
**gekennzeichnet durch** eine Messeinrichtung (63), welche eingerichtet ist, um eine Relativverlagerung des Halteelements (9) zu messen, wobei die Messeinrichtung (63) insbesondere einen Glasmaßstab (65) und einen mit diesem zusammenwirkenden optischen Sensor (67), oder einen magnetischen Sensor aufweist.

14. Fokussiereinrichtung (1) nach einem der vorhergehenden Ansprüche, **gekennzeichnet durch** eine Regelungseinrichtung, welche eingerichtet ist, um die Relatiwerlagerung des Halteelements (9) zu regeln.

15. Laserbearbeitungseinrichtung (3) zur Bearbeitung eines Werkstücks mittels eines Laserstrahls, **gekennzeichnet durch** eine Fokussiereinrichtung (1) nach einem der Ansprüche 1 bis 14.
